# EUROPÄISCHE PATENTSCHRIFT

(11) **EP 3 645 647 B1**
(45) Veröffentlichungstag und Bekanntmachung des Hinweises auf die Patenterteilung: **12.07.2023**
(21) Anmeldenummer: 18736842.8
(22) Anmeldetag: 26.06.2018
(51) Int. Cl.: C09J 7/38, C09J 133/04, C08K 5/00

(54) **VERFAHREN ZUR HERSTELLUNG EINES KLEBEBANDES**
METHOD FOR PRODUCING AN ADHESIVE TAPE
PROCÉDÉ DE PRODUCTION D'UN RUBAN ADHÉSIF

(30) Priorität: 27.06.2017 DE 102017114266
(43) Veröffentlichungstag der Anmeldung: 06.05.2020
(73) Patentinhaber: Certoplast Technische Klebebänder GmbH, 42285 Wuppertal (DE)
(72) Erfinder: MEIER, Thorsten, 40699 Erkrath (DE)
(74) Vertreter: Andrejewski - Honke Patent- und Rechtsanwälte Partnerschaft mbB
(86) Internationale Anmeldenummer: PCT/EP2018/067149
(87) Internationale Veröffentlichungsnummer: WO 2019/002314

(56) Entgegenhaltungen:
- EP-A1- 1 725 626
- EP-A1- 2 733 186
- EP-A1- 2 933 299
- US-A1- 2006 228 545

## Beschreibung

Die Erfindung betrifft die Verwendung eines Wickelbandes zum Ummanteln von Kabel in Automobilen, wonach ein bandförmiger Träger mit einer UV-vernetzbaren Klebebeschichtung ausgerüstet wird, wonach ferner die Klebebeschichtung neben einem Haftklebstoff auf Acrylatbasis mit eingelagerten Fotoinitiatoren zumindest einen Zusatz aufweist und wonach die Fotoinitiatoren durch Bestrahlung mit einer im Bereich ihrer Aktivierungswellenlänge emittierenden UV-Lichtquelle zur Vernetzung aktiviert werden. - Die Fotoinitiatoren können dabei in die Klebebeschichtung einpolymerisiert, eingerührt oder sonst wie eingebracht werden.

Die Verwendung des eingangs beschriebenen Aufbaus wird beispielhaft in der EP 1 548 080 B1 beschrieben. Hier geht es insgesamt um ein technisches Klebeband, welches für den Einsatz im Bauwesen geeignet sein soll. Zu diesem Zweck wird mit einem hohen spezifischen Flächengewicht von mindestens 100 g/m² für die Klebebeschichtung gearbeitet. Durch die eingestellten Parameter soll eine besonders gute Haftung auch auf rauen Untergründen zur Verfügung gestellt werden.

UV-vernetzbare Klebebeschichtungen verfügen typischerweise neben dem Haftklebstoff auf Acrylatbasis mit eingelagerten Fotoinitiatoren zusätzlich noch über einen Zusatz, der im Allgemeinen die Haftung auf dem Träger erhöhen soll. Das gilt insbesondere für unpolare Oberflächen von Trägern. Solche Zusätze stören jedoch unter Umständen die anschließende Vernetzung. Tatsächlich wird der bandförmige Träger typischerweise zunächst mit der Klebebeschichtung ausgerüstet und anschließend mit der UV-Lichtquelle bestrahlt.

Dabei sorgt die UV-Lichtquelle primär dafür, dass die Fotoinitiatoren im Bereich ihrer Aktivierungswellenlänge mit der erforderlichen UV-Dosis bestrahlt werden, damit als Folge hiervon die gewünschte Vernetzung der Klebebeschichtung erfolgt. Dabei kommt es nicht notwendigerweise darauf an, dass beispielsweise ein Emissionsmaximum der UV-Lichtquelle mit der Aktivierungswellenlänge der Fotoinitiatoren zusammenfällt. Entscheidend ist vielmehr, dass die UV-Lichtquelle im Bereich der Aktivierungswellenlänge der Fotoinitiatoren die erforderliche UV-Dosis - gegebenenfalls auch auf längeren Zeitskalen - zur Verfügung stellt. Tatsächlich sorgen die in den Haftklebstoff auf Acrylatbasis eingelagerten Fotoinitiatoren dafür, dass die Acrylatpolymere insgesamt zu einem relativ weitmaschigen Netzwerk verknüpft werden.

Um die Vernetzung und folglich die Aktivierung der Fotoinitiatoren nicht zu gefährden, wird im Stand der Technik im Rahmen einer Veröffentlichung der Firma BASF zum Thema "UV-Curable acrylic hotmelts for PSAs" mit dem Veröffentlichungsdatum 22. Mai 2001 betont, dass aus diesem Grund der Zusatz zu dem Haftklebstoff im Bereich der relevanten Aktivierungswellenlänge der Fotoinitiatoren nicht oder praktisch nicht absorbieren darf. Andernfalls soll nicht genügend UV-C-Licht im Beispielfall in die Klebebeschichtung eindringen können, um die zuvor beschriebene Vernetzung vollflächig zu gewährleisten.

In diesem Zusammenhang korrespondiert UV-C-Licht wie allgemein üblich zu einem Wellenlängenbereich zwischen 200 und 280 nm, welcher auch als fernes UV bezeichnet wird und nachfolgend als solches zugrunde zu legen ist. Demgegenüber kennzeichnet mittleres UV bzw. UVB-Strahlung den Wellenlängenbereich von 280 nm bis 315 nm. Nahes UV bzw. Schwarzlicht korrespondiert als UV-A-Strahlung zum Wellenlängenbereich von 315 nm bis 380 nm. So oder so und als Folge der zuvor wiedergegebenen Vorgabe haben sich in der Praxis lediglich Zusätze neben dem Haftklebstoff auf Acrylatbasis mit den eingelagerten Fotoinitiatoren durchgesetzt, die im Bereich der Aktivierungswellenlänge praktisch nicht absorbieren.

Ein in diesem Zusammenhang marktgängiges Produkt wird unter der Kennzeichnung Foral 85 oder Foral 105 vertrieben. In beiden Fällen handelt es sich um Harzbeimischungen auf Abietinsäureesterbasis, sofern diese hydriert sind und folglich die geforderte Durchlässigkeit im Bereich der Aktivierungswellenlänge aufweisen. Nachteilig an den zuvor beschriebenen Harzbeimischungen ist deren Preis, welcher teilweise sogar denjenigen des eigentlichen Haftklebstoffes auf Acrylatbasis mit den eingelagerten Fotoinitiatoren überschreiten kann.

In der WO 2016/186877 A1 wird eine druckempfindliche Kleberbeschichtung beschrieben, die auch zur Herstellung von Klebebändern mit beispielsweise Gewebeträger eingesetzt wird. Die Klebebeschichtung greift auf ein Acrylat mit eingelagerten Fotoinitiatoren zurück, die durch UV-Lampen vernetzt werden. Außerdem wird als geeigneter Zusatz auf der Seite 16 oben das zuvor bereits in Bezug genommene Produkt Foral 85 erwähnt.

Der nächstliegende Stand der Technik nach der EP 2 733 186 A1 beschäftigt sich mit einer Haftklebemasse auf Acrylatbasis, die unter anderem auf einen Papierträger aufgebracht werden kann. Der Haftklebstoff auf Acrylatbasis ist mit eingelagerten Fotoinitiatoren und zusätzlich einer Harzbeimischung ausgerüstet. Die Vernetzung mit Hilfe einer UV-Lichtquelle findet im UV-B-Bereich statt.

Der Erfindung liegt das technische Problem zugrunde, die eingangs beschriebene Verwendung eines Klebebandes und insbesondere Wickelbandes so weiter zu entwickeln, dass die Herstellungskosten signifikant reduziert sind.

Zur Lösung dieser technischen Problemstellung ist die Verwendung zur Herstellung eines Wickelbandes nach Anspruch 1 vorgesehen.

Im Rahmen der Erfindung werden also bewusst Fotoinitiatoren ausgewählt, deren Aktivierungswellenlänge deutlich von derjenigen abweicht, wie sie typischerweise bei handelsüblichen Produkten wie dem Haftklebstoff acResin der Firma BASF zum Einsatz kommen, die hauptsächlich im Bereich von 250 bis 260 nm absorbieren. Tatsächlich wurde bisher im Stand der Technik mit Fotoinitiatoren gearbeitet, die überwiegend im UV-C-Bereich absorbieren und folglich zu ihrer Aktivierung eine UV-Lichtquelle erfordern, die zumindest - auch - in dem fraglichen UV-C-Bereich emittiert. Diese Anforderung und Auslegung hat sich im Wesentlichen aufgrund der Erkenntnis ergeben und in der Praxis durchgesetzt, dass nur dadurch praktisch unkontrollierte Vernetzungen, beispielsweise durch das Sonnenlicht vermieden werden können. Tatsächlich weist nämlich natürliches Sonnenlicht eine spektrale Verteilung auf, die typischerweise erst im UV-A-Bereich am kurzwelligen Ende beginnt. Folglich sind unkontrollierte Vernetzungen im UV-C-Bereich durch Sonnenlicht praktisch nicht zu erwarten.

Aus diesem Grund wird bisher zur Vernetzung mit Quecksilberdampfstrahlern gearbeitet, wie sie beispielhaft im Stand der Technik nach der EP 1 548 080 B1 in Bezug genommen werden. Solche Quecksilberdampfstrahler weisen signifikante Emissionsspitzen im UV-C-Bereich auf und sind folglich für die Vernetzung der bisher eingesetzten Fotoinitiatoren geeignet. Allerdings erfordern derartige Quecksilberdampfstrahler oftmals eine zusätzliche Kühlung, sind folglich von ihrer Handhabung her aufwendig und stehen auch nur zu einem relativ hohen Preis zur Verfügung.

Demgegenüber arbeitet die Erfindung bewusst mit Fotoinitiatoren, deren Aktivierungswellenlänge oberhalb von 315 nm angesiedelt ist. Solche Fotoinitiatoren werden grundsätzlich und beispielhaft in der DE 695 15 310 T2 beschrieben. Das heißt, die an dieser Stelle eingesetzte UV-Lichtquelle kann eine solche sein, die primär im UV-A-Bereich, das heißt im Wellenlängenbereich zwischen 315 nm und 380 nm, emittiert. Solche UV-A-Lichtquellen stehen preisgünstig und in großer Zahl zur Verfügung.

Das gilt insbesondere für den Fall, dass als UV-Lichtquelle eine solche auf LED-Basis eingesetzt wird. Denn aufgrund der zuvor beschriebenen Auslegung kann die UV-Lichtquelle auf LED-Basis als UV-A-LED-Lichtquelle ausgebildet sein. Solche UV-A-LED-Lichtquellen stehen in großer Zahl und preisgünstig zur Verfügung, so dass die Herstellungskosten signifikant gegenüber bisherigen Vorgehensweisen reduziert werden können. Außerdem ist der Aufwand verringert, weil UV-Lichtquellen typischerweise keine zusätzliche Kühlung benötigen.

Die UV-Lichtquelle bestrahlt die Klebebeschichtung in der Regel mit einer UV-Dosis von zumindest 15 mJ/cm², vorzugsweise mit wenigstens 30 mJ/cm². Insbesondere wird eine UV-Dosis von im Minimum 50 mJ/cm² beobachtet. In der Regel wird mit einer US-Dosis von 150 mJ/cm² bis 500 mJ/cm² gearbeitet. Vorzugsweise werden UV-Dosen im Bereich zwischen 200 mJ/cm² bis 400 mJ/cm² beobachtet. Dabei hat sich in einem Wellenlängenbereich von ca. 250 nm bis 260 nm eine Dosis von 60 bis 80 mJ/cm² als besonders günstig erwiesen. Derartige UV-Dosen lassen sich mit UV-Lichtquellen auf LED-Basis besonders einfach und problemlos realisieren, weil UV-LED-Lichtquellen ein breites Emissionsspektrum aufweisen und im Gegensatz zu Quecksilberlampen keine ausgeprägten Emissionsspitzen zeigen. Das heißt, es ist mit einem gleichmäßigen Emissionsspektrum der UV-LED-Lichtquelle zu rechnen.

Nach weiterer vorteilhafter Ausgestaltung mit besonderer Bedeutung ist der die Klebebeschichtung aufnehmende bandförmige Träger darüber hinaus opak ausgelegt, absorbiert also insbesondere die auftreffende Tageslichtstrahlung. Aufgrund dieser Auslegung ist erfindungsgemäß auch nicht mit einer unkontrollierten Vernetzung durch Sonnenlicht zu rechnen. Denn der mit der Klebebeschichtung ausgerüstete bandförmige Träger wird nach der UV-Vernetzung zunächst einmal zu einzelnen Wickeln aufgerollt.

Diese Wickel zeichnen sich dadurch aus, dass die Klebebeschichtung jeweils innenseitig der solchermaßen erzeugten Spirale angeordnet ist, wohingegen der opak ausgelegte bandförmige Träger nach außen hinweist. Dadurch kann etwaige Tageslichtstrahlung praktisch nicht in die Klebebeschichtung eindringen. Und wenn, dann erfolgt allenfalls eine zusätzliche sowie geringfügige Vernetzung des Haftklebstoffes auf Acrylatbasis mit den eingelagerten Fotoinitiatoren, was grundsätzlich erwünscht ist oder erwünscht sein kann.

Zur Verarbeitung des Klebebandes wird dieses erfindungsgemäß als Wickelband zum Ummanteln von Kabeln in Automobilen eingesetzt. Folgerichtig wird das fragliche Klebeband bzw. Wickelband in der Regel wendelförmig um die jeweils zu ummantelnden oder zusammenzufassenden Kabel eines Kabelsatzes herumgewickelt. Bei dieser wendelförmigen Umwicklung der Kabel des Kabelsatzes weist jeweils der opak ausgelegte Träger erneut nach außen, so dass wiederum die innenseitig vorgesehene Klebebeschichtung vom Tageslicht praktisch nicht oder allenfalls kontrolliert erreicht wird. Dadurch kann mit Hilfe der UV-Lichtquelle beim Herstellungsprozess der gewünschte Vernetzungsgrad des Haftklebstoffes auf Acrylatbasis mit den eingelagerten Fotoinitiatoren und folglich größtenteils die Haftkraft eingestellt werden, ohne dass an dieser Einstellung Änderungen durch die anschließende Verarbeitung zu erwarten sind.

Die Fotoinitiatoren werden in der Regel mit einer Grammatur von mindestens 0,05 Gew.-% in die Klebebeschichtung eingebracht. In der Regel wird mit einer Grammatur von 0,2 Gew.-% bis 5 Gew.-% gearbeitet. Dabei sind die Fotoinitiatoren im Allgemeinen in das Netzwerk des Haftklebstoffes auf Acrylatbasis eingebunden, das heißt es handelt sich um die eingelagerten Fotoinitiatoren. Wie üblich können über die UV-Dosis die Vernetzungsdichte und damit die Klebeeigenschaften der Klebebeschichtung in gewissen Grenzen eingestellt werden. So führt eine hohe UV-Dosis tendenziell zu höherer Scherfestigkeit der Klebebeschichtung, während bei geringerer UV-Dosis mit einer höheren Klebrigkeit bei geringerer Scherfestigkeit zu rechnen ist. Jedenfalls werden diese produktionstechnisch eingestellten Parameter und wird folglich die Vernetzungsdichte durch die anschließende Verarbeitung des Klebebandes als Wickelband zum Ummanteln von Kabeln in Automobilen nicht oder praktisch nicht beeinflusst. Denn etwaiges Sonnenlicht wird durch den bandförmigen und opaken Träger, welcher in verarbeitetem Zustand nach außen weist, einwandfrei und fast vollständig absorbiert.

Die Klebebeschichtung wird im Allgemeinen mit einem Auftragsgewicht von mehr als 15 g/cm², insbesondere von mehr als 20 g/cm² und vorzugsweise mit einem Auftragsgewicht von mehr als 50 g/cm² auf den Träger aufgebracht. Als Obergrenze empfiehlt die Erfindung ein Auftragsgewicht von 200 g/cm², vorzugsweise eine Obergrenze von 90 g/cm². Bei dem Zusatz handelt es sich typischerweise um eine Harzbeimischung zur Erhöhung der Haftung auf dem Träger. Der Träger als solcher ist in der Regel als textiles Flächengebilde ausgebildet. Hierbei kann es um ein Vlies, ein Gewebe oder auch ein Fluor handeln. Das Flächengewicht des textilen Flächengebildes liegt zwischen 50 g/m² und 250 g/m². Vorzugsweise werden Flächengewichte zwischen 70 g/m² und 200 g/m² beobachtet.

Um den zuvor bereits beschriebenen opaken Charakter des Trägers zu erreichen, wird das textile Flächengebilde in der Regel eingefärbt. Hier haben sich Einfärbungen mit beispielsweise schwarzer Farbe als günstig erwiesen. Grundsätzlich reicht es jedenfalls aus, dass der in verarbeitetem Zustand nach außen weisende textile Träger soweit opak ausgelegt ist, dass etwaiges auftreffendes Sonnenlicht nicht oder praktisch nicht bis zur Klebebeschichtung vordringt oder vordringen kann.

Im Ergebnis wird die Verwendung eines Wickelbandes beschrieben, welches im Vergleich zu bisherigen Vorgehensweisen im Stand der Technik von seinen Produktionskosten her deutlich reduziert ist. Das lässt sich im Kern auf zwei Aspekte zurückführen. Zunächst einmal ermöglicht der Einsatz von Fotoinitiatoren mit einer Aktivierungswellenlänge oberhalb von 280 nm den Rückgriff auf UV-A-Lichtquellen, die besonders preisgünstig zur Verfügung stehen und einfach sowie problemlos zu handhaben sind. Das gilt insbesondere für den Fall, dass an dieser Stelle UV-A-LED-Lichtquellen für die Vernetzung der Klebebeschichtung zum Einsatz kommen.

Zum anderen und als weiterer wesentlicher Effekt ist zu berücksichtigen, dass die erfindungsgemäße Klebebeschichtung mit einem Zusatz zu dem Haftklebstoff ausgerüstet wird oder werden kann, welcher ebenfalls kostengünstig zur Verfügung steht. Der Zusatz liegt dabei in der Klebebeschichtung in einer Grammatur von mindestens 5 Gew.-% oder wenigstens 10 Gew.-% vor. Außerdem wird für den Zusatz meistens eine Obergrenze von 30 Gew.-% bis 40 Gew.-% beobachtet. Denn es kommt bei diesem Zusatz praktisch nur darauf an, dass dieser beispielsweise als Harzbeimischung zur Erhöhung der Haftung der Klebebeschichtung auf dem Träger sorgt. Andere weitergehende Anforderungen bestehen nicht oder praktisch nicht. Insbesondere sind im Stand der Technik als gleichsam unverzichtbar angesehene Harzbeimischungen auf hydrierter Abietinsäureesterbasis ausdrücklich entbehrlich, weil es erfindungsgemäß auf die durch diese Zusätze zur Verfügung gestellte Transparenz im Wellenlängenbereich zwischen 250 nm und 260 nm überhaupt nicht ankommt.

Vielmehr reicht es aus, wenn die fragliche Harzbeimischung zu dem Haftklebstoff auf Acrylatbasis mit den eingelagerten Fotoinitiatoren im Bereich der Aktivierungswellenlänge der Fotoinitiatoren, das heißt oberhalb von 280 nm und insbesondere oberhalb von 315 nm, nicht oder kaum absorbiert. Hierunter ist erfindungsgemäß zu verstehen, dass die Absorption bzw. Extinktion E der betreffenden Harzbeimischung im Bereich der Aktivierungswellenlänge der Fotoinitiatoren, d. h. oberhalb von 280 nm und insbesondere oberhalb von 315 nm typischerweise um den Faktor 5, insbesondere um den Faktor 10 reduziert ist. Die fragliche Reduktion stellt sich im Vergleich zum Bereich unterhalb der Aktivierungswellenlänge, d. h. vorliegend unterhalb von 280 nm und insbesondere unterhalb von 315 nm ein. Dieses Kriterium wird von nahezu allen handelsüblichen Harzbeimischungen bzw. Tackifiern erfüllt, so dass als Folge hiervon der Herstellungspreis des nach dem erfindungsgemäßen Verfahren produzierten Klebebandes gegenüber dem Stand der Technik signifikant reduziert werden kann. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Vorrichtung zur Durchführung des erfindungsgemäßen Verfahrens schematisch,

- Fig. 2: ein Absorptionsspektrum des Haftklebstoffes auf Acrylatbasis mit eingelagerten Fotoinitiatoren sowie zwei Varianten mit unterschiedlichen Zusätzen und
- Fig. 3: das Absorptionsspektrum der erfindungsgemäß zum Einsatz kommenden Fotoinitiatoren.

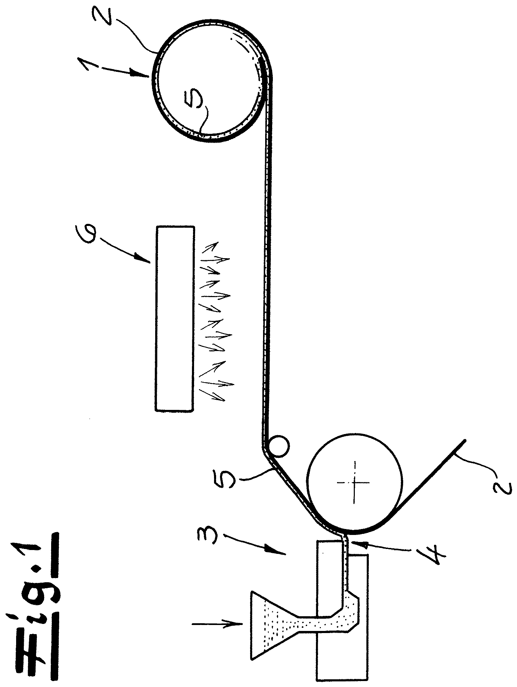

In der Fig. 1 ist eine Vorrichtung dargestellt, mit deren Hilfe ein Klebeband 1 hergestellt werden kann. Zu diesem Zweck wird ein Träger 2 einer Beschichtungsanlage 3 für Schmelzklebstoff zugeführt. In der Beschichtungsanlage 3 für den Schmelzklebstoff befindet sich der Schmelzklebstoff auf einer Temperatur von ca. 100 °C bis 150 °C und kann über eine ausgangsseitige Düse 4 der Beschichtungsanlage 3 auf den an der Düse 4 vorbei bewegten Träger 2 aufgebracht und der Träger 2 beschichtet werden.

Bei dem Träger 2 handelt es sich um einen bandförmigen Träger 2, der als textiles Flächengebilde ausgebildet ist und über ein Flächengewicht zwischen 50 g/m² und 250 g/m² verfügt. Nach der Beschichtung des bandförmigen Trägers 2 mit einer auf diese Weise realisierten Klebebeschichtung 5 wird die Klebebeschichtung 5 mit Hilfe einer oberhalb des durchlaufenden beschichteten Trägers 2 angeordneten UV-Lichtquelle 6 vernetzt. Es versteht sich, dass die Klebebeschichtung 5 bei diesem Vorgang der UV-Lichtquelle 6 zugewandt ist. Bei der Lichtquelle 6 handelt es sich um eine solche, die auf LED-Basis ausgelegt ist. Tatsächlich sind an dieser Stelle eine Vielzahl an LEDs realisiert. Grundsätzlich kann die UV-Lichtquelle 6 aber auch auf beispielsweise eine Quecksilber-Dampflampe zurückgreifen. Das ist jedoch nicht dargestellt.

Der mit der Klebebeschichtung 5 ausgerüstete Träger 2 bewegt sich unterhalb der UV-Lichtquelle 6 mit einer Geschwindigkeit von 10 m/min bis 100 m/min oder mehr. Die Klebebeschichtung 5 wird dabei seitens der UV-Lichtquelle 6 mit einer UV-Dosis von im Minimum 15 mJ/cm² bestrahlt. Nach dem Ausführungsbeispiel kommt eine UV-Dosis im Bereich von 150 mJ/cm² bis 500 mJ/cm² zum Einsatz. Die UV-Lichtquelle 6 emittiert dabei unter anderem im Bereich der Aktivierungswellenlänge für die in die Klebebeschichtung 5 eingelagerte Fotoinitiatoren, das heißt vorliegend primär im Bereich oberhalb von 280 nm.

Bei der Klebebeschichtung 5 handelt es sich um eine solche, die neben einem Haftklebstoff auf Acrylatbasis mit eingelagerten Fotoinitiatoren zumindest einen Zusatz aufweisen. Als Zusatz greift die Erfindung auf eine Harzbeimischung auf Basis eines lediglich teilhydrierten Abietinsäureesters zurück. Nach der Ausrüstung des Trägers 2 mit der Klebebeschichtung 5 kann das solchermaßen hergestellte Klebeband 1 aufgewickelt oder beispielsweise in Längsrichtung geschnitten werden, wenn an dieser Stelle als Träger 2 beispielsweise eine Gewebebahn der Beschichtungsanlage 3 zugeführt wird. Das ist im Einzelnen bekannt.

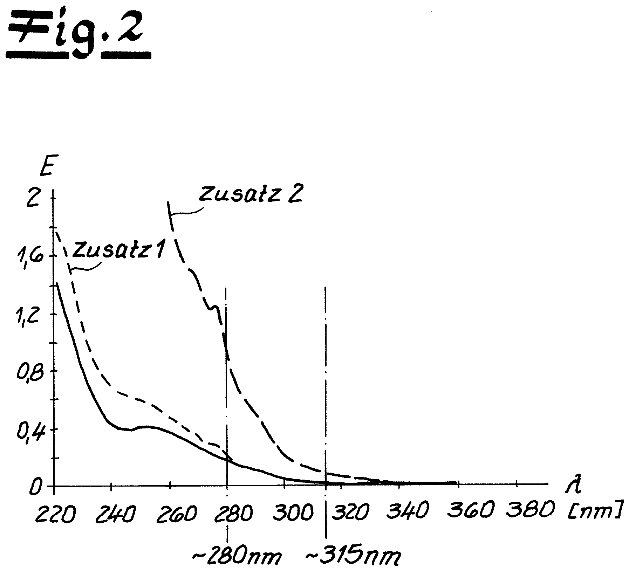

In der Fig. 2 ist die Absorption bzw. Extinktion E gegenüber der Wellenlänge dargestellt. Die dimensionslose Extinktion E ist bekanntermaßen ein Maß für die Verminderung der Intensität des in einem Fotomesser gemessenen Lichtes beim Durchgang durch die entsprechende Probe. Durchgezogen dargestellt ist der Verlauf der Extinktion bzw. Absorption gegenüber der Wellenlänge für den im Rahmen der Erfindung im Beispielfall eingesetzten Haftklebstoff auf Acrylatbasis, nämlich acResin A203UV. Die weiteren Kurven betreffen den fraglichen Haftklebstoff auf Acrylatbasis, einerseits mit einem Zusatz 1 (gestrichelt). Der Zusatz 1 stellt dabei eine Harzbeimischung auf Abietinsäureesterbasis dar, die teilhydriert worden ist. Die strichpunktierte Variante mit dem Zusatz 2 betrifft ebenfalls eine Harzbeimischung auf Abietinsäureesterbasis, die nur geringfügig oder praktisch kaum teilhydriert worden ist. Als Zusatz 1 wurde das Produkt YT311 der Firma Yser eingesetzt. Bei dem Zusatz 2 handelt es sich um YT321, ebenfalls von Yser.

Man erkennt, dass die auf diese Weise realisierte Klebebeschichtung 5 mit abnehmender Hydrierung der Harzbeimischung auf Abietinsäureesterbasis zunehmend in Richtung höherer UV-Wellenlängen absorbiert. Da erfindungsgemäß die Aktivierungswellenlänge der Fotoinitiatoren oberhalb von 280 nm und insbesondere oberhalb von 315 nm angesiedelt ist, lassen sich derartige Harzbeimischungen gleichwohl einsetzen, weil trotz dieser Harzbeimischungen genügend Licht der UV-Lichtquelle 6 in die Klebebeschichtung 5 eindringt, um die eingelagerten Fotoinitiatoren ausreichend zu aktivieren. Das deutet die Fig. 2 an, in welcher das Minimum der Aktivierungswellenlänge von 280 nm ebenso wie der bevorzugte Bereich oberhalb von 315 nm eingezeichnet ist.

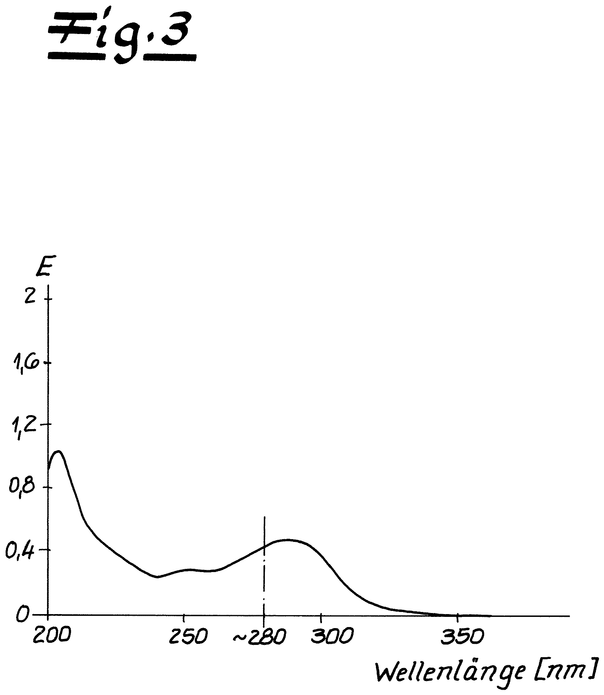

In der Fig. 3 ist schließlich noch das Absorptionsspektrum der erfindungsgemäß eingesetzten Fotoinitiatoren dargestellt. Tatsächlich wird auch in diesem Fall die Extinktion E über der Wellenlänge wiedergegeben. Man erkennt, dass im Bereich zwischen ca. 280 nm und 300 nm das Absorptionsmaximum der eingesetzten Fotoinitiatoren angesiedelt ist, so dass die entsprechend ausgelegte Aktivierungswellenlänge der UV-Lichtquelle 6 die Fotoinitiatoren einwandfrei vernetzen kann.

Schließlich ist noch zu berücksichtigen, dass der bandförmige Träger 2 opak ausgelegt ist. Zu diesem Zweck handelt es sich bei dem Träger 2 beispielhaft um ein eingefärbtes textiles Flächengebilde, beispielsweise ein schwarz eingefärbtes Gewebe, ein schwarz eingefärbtes Vlies etc.. Auf diese Weise wird auftreffendes natürliches UV-Licht bzw. Tageslicht mit Hilfe des Trägers 2 absorbiert, weil dieser sowohl im Lagerungszustand als auch im Verarbeitungszustand jeweils nach außen hin weist. Tatsächlich erkennt man anhand der in der Fig. 1 dargestellten Vorrichtung, dass das betreffende Klebeband 1 mit dem nach außen weisenden Träger 2 zu einem Wickel aufgewickelt wird, so dass bei der Lagerung durch den opak ausgelegten Träger 2 keine UV-Strahlung bis zur innenseitigen Klebebeschichtung 5 vordringen kann. Das Gleiche gilt für den Fall, dass das auf diese Weise hergestellte Klebeband 1 bestimmungsgemäß als Wickelband zum Ummanteln von Kabeln in Automobilen eingesetzt wird.

Denn zu diesem Zweck wird das fragliche Klebeband 1 wendelförmig um die jeweils zusammenfassenden Kabel herumgewickelt. Auch in diesem Fall weist der Träger 2 nach außen und sorgt mit seinem opaken Charakter dafür, dass etwaiges Tageslicht und folglich im Tageslicht vorhandene UV-Anteile die innenseitig vorhandene Klebebeschichtung 5 nicht oder praktisch nicht erreichen. Dadurch wird der herstellungsseitig eingestellte Vernetzungsgrad nicht oder praktisch nicht beeinflusst.

Insbesondere die Darstellung in der Fig. 2 in Kombination mit der Fig. 3 macht deutlich, dass im Rahmen der Erfindung die Wellenlänge der eingesetzten Fotoinitiatoren bzw. deren Absorptionsspektrum an die UV-Lichtquelle 6 angepasst ist bzw. angepasst werden kann. Tatsächlich handelt es sich bei den Fotoinitiatoren um solche, die Benzoinether wie beispielsweise Benzoin-Methylether enthalten und unter anderem unter dem Markennamen "IRGACURE 651" verfügbar sind. Ergänzend sei hierzu auf die einleitend bereits in Bezug genommene WO 2016/186877 hingewiesen, die solche Fotoinitiatoren beschreibt. Jedenfalls können hierdurch insgesamt produktionstechnisch günstige Harzbeimischungen zur Erhöhung der Haftung auf dem Träger als Zusatz Berücksichtigung finden, die im Bereich der Aktivierungswellenlänge der Fotoinitiatoren nicht oder kaum absorbieren. Das erkennt man anhand der Fig. 2 und exemplarisch an dem Zusatz 2, dessen Extinktion E im Bereich oberhalb von 280 nm, der Aktivierungswellenlänge der Fotoinitiatoren, auf Werte von 1,0 gesunken ist, wohingegen unterhalb der Aktivierungswellenlänge Extinktionen von 2 und noch mehr beobachtet werden.

Erst recht wird dieser Umstand deutlich, wenn man von einer Aktivierungswellenlänge von 315 nm ausgeht. Hier beträgt die Extinktion E des Zusatzes 2 weniger als 0,1, wohingegen die Extinktion im Bereich darunter Werte annimmt, die typischerweise das 10-fache oder noch mehr betragen. Das heißt, die Harzbeimischung bzw. der Zusatz 2 im Beispiel absorbiert im Bereich der Aktivierungswellenlängen der Fotoinitiatoren sowie darüber nicht oder kaum, was bedeutet, dass die Extinktion E mindestens um den Faktor 5, typischerweise um den Faktor 10 oder mehr verringert ist, im Vergleich zu der Extinktion E der Harzbeimischung (Zusatz 2) unterhalb der Aktivierungswellenlänge.

## Patentansprüche

1. Verwendung eines Wickelbandes zum Ummanteln von Kabeln in Automobilen, wonach
- ein bandförmiger und aus einem eingefärbten textilen Flächengebilde sowie folglich opak ausgelegter Träger (2) mit einer UV-vernetzbaren Klebebeschichtung (5) ausgerüstet wird, wonach ferner
- die Klebebeschichtung (5) neben einem Haftklebstoff auf Acrylatbasis mit eingelagerten Fotoinitiatoren zumindest einen als Harzbeimischung zur Erhöhung der Haftung auf dem Träger (2) ausgebildeten Zusatz aufweist, wobei
- die Harzbeimischung im Bereich der Aktivierungswellenlänge der Fotoinitiatoren nicht oder kaum absorbiert, und wobei
- die Absorption bzw. Extinkion (E) der betreffenden Harzbeimischung im Bereich der Aktivierungswellenlänge der Fotoinitiatoren um den Faktor 5 und insbesondere um den Faktor 10 im Vergleich zum Bereich unterhalb der Aktivierungswellenlänge reduziert ist, wonach weiter
- die Fotoinitiatoren durch Bestrahlung mit einer im Bereich ihrer Aktivierungswellenlänge oberhalb von 315 nm emittierenden UV-Lichtquelle (6) zur Vernetzung aktiviert werden, und wonach
- das Wickelband wendelförmig um die jeweils zu ummantelnden Kabel eines Kabelsatzes mit nach außen weisendem Träger (2) herumgewickelt wird, so dass
- auftreffendes natürliches UV-Licht bzw. Tageslicht mithilfe des Trägers (2) absorbiert wird, weil dieser sowohl im Lagerungszustand als auch im Verarbeitungzustand jeweils nach außen hinweist.

2. Verwendung nach Anspruch 1, **dadurch gekennzeichnet, dass** die UV-Lichtquelle (6) die Klebebeschichtung (5) mit einer UV-Dosis von im Minimum 15 mJ/cm², bevorzugt 30 mJ/cm² und insbesondere im Minimum von 50 mJ/cm² und vorzugsweise mit einer UV-Dosis von 150 mJ/cm² bis 500 mJ/cm², besonders bevorzugt zwischen 200 mJ/cm² bis 400 mJ/cm², bestrahlt.

3. Verwendung nach Anspruch 1 oder 2, **dadurch gekennzeichnet, dass** als UV-Lichtquelle (6) eine solche auf LED-Basis eingesetzt wird.

4. Verwendung nach Anspruch 3, **dadurch gekennzeichnet, dass** die UV-Lichtquelle (6) auf LED-Basis als UVA-LED-Lichtquelle (6) ausgebildet ist.

5. Verwendung nach einem der Ansprüche 1 bis 4, **dadurch gekennzeichnet, dass** die Fotoinitiatoren in einer Grammatur von mindestens 0,05 Gew.-%, vorzugsweise in einer Grammatur von 0,2 Gew.-% bis 5 Gew.-%, in die Klebebeschichtung (5) eingebracht werden.

6. Verwendung nach einem der Ansprüche 1 bis 5, **dadurch gekennzeichnet, dass** die Klebebeschichtung (5) mit einem Auftragsgewicht von mehr als 15 g/cm² auf den auf den Träger (2) aufgebracht wird.

7. Verwendung nach einem der Ansprüche 1 bis 6, **dadurch gekennzeichnet, dass** als Zusatz eine Harzbeimischung zur Erhöhung der Haftung auf dem Träger vorgesehen wird.

8. Verwendung nach einem der Ansprüche 1 bis 7, **dadurch gekennzeichnet, dass** als Träger ein textiles Flächengebilde mit einem Flächengewicht zwischen 50 g/m² und 250 g/m², vorzugsweise von 70 g/m² bis 200 g/m², eingesetzt wird.

## Claims

1. Use of a wrapping tape for encasing cables in automobiles, according to which
- a tape-like carrier (2) also consisting of a dyed textile fabric and subsequently rendered opaque is equipped with a UV-curable adhesive coating (5), according to which further,
- besides an acrylate-based contact adhesive with embedded photoinitiators, the adhesive coating (5) includes at least one additive in the form of a resin blending to enhance adhesion on the carrier (2), wherein
- the resin blending is weakly absorbent or entirely non-absorbent in the range of the activation wavelength of the photoinitiators, and wherein
- the absorption and/or extinction (E) of the resin blending concerned is reduced by a factor of 5, and particularly by a factor of 10 in the range of the activation wavelength of the photoinitiators compared with the range below the activation wavelength of the photoinitiators, according to which further
- the photoinitiators are activated for curing by irradiation with a UV light source (6) emitting in the range of their activation wavelength above 315 nm, and according to which
- the wrapping tape is wound helically around the respective cables of a cable set that are to be encased with carrier (2) facing outwards, so that
- the carrier (2) is instrumental in absorbing incident natural UV light and/or daylight, because said carrier faces outwards in both the storage state and the processing state.

2. Use according to Claim 1, **characterized in that** the UV light source (6) irradiates the adhesive coating (5) with a UV dose of at minimum 15 mJ/cm², preferably 30 mJ/cm² and particularly a minimum of 50 mJ/cm², and preferably with a UV dose of 150 mJ/cm² to 500 mJ/cm², particularly preferably between 200 mJ/cm² and 400 mJ/cm².

3. Use according to Claim 1 or 2, **characterized in that** a LED-based UV light source (6) is used as such.

4. Use according to Claim 3, **characterized in that** the LED-based UV light source (6) is embodied as a UVA-LED light source (6).

5. Use according to any one of Claims 1 to 4, **characterized in that** the photoinitiators are implanted in the adhesive coating (5) in a grammage of at least 0.05% by weight, preferably in a grammage from 0.2% by weight to 5% by weight.

6. Use according to any one of Claims 1 to 5, **characterized in that** the adhesive coating (5) is applied to the carrier (2) with an application weight of more than 15 g/cm².

7. Use according to any one of Claims 1 to 6, **characterized in that** a resin blending is provided as additive to increase the adhesion on the carrier.

8. Use according to any one of Claims 1 to 7, **characterized in that** a textile fabric with a grammage between 50 g/m² and 250 g/m², preferably from 70 g/m² to 200 g/m², is used as the carrier.

## Revendications

1. Utilisation d'une bande d'enroulement pour envelopper des câbles dans le secteur automobile, d'après laquelle
- un support (2) en forme de bande et dans une structure de surface textile teintée et conçu en conséquence de façon opaque est équipé d'un revêtement adhésif (5) réticulable aux UV, d'après laquelle en plus
- le revêtement adhésif (5) comporte en plus d'une colle autoadhésive à base acrylique avec photo-initiateurs incorporés au moins un additif constitué sous la forme d'un mélange à base de résine pour rehausser l'adhérence au support (2), sachant que
- le mélange à base de résine n'absorbe pas ou à peine dans le secteur de la longueur d'ondes d'activation des photo-initiateurs, et sachant que
- l'absorption ou l'extinction (E) du mélange à base de résine concerné est réduit dans le secteur de la longueur d'ondes d'activation des photo-initiateurs d'un facteur 5 et en particulier d'un facteur 10 en comparaison de la plage située en-dessous de la longueur d'onde d'activation, d'après laquelle en plus
- les photo-initiateurs sont activés pour réticulation par rayonnement avec une source lumineuse (6) d'UV émettant dans une plage de sa longueur d'ondes d'activation au-dessus de 315 nm, et d'après laquelle
- la bande d'enroulement est enroulée en spirales autour des câbles à envelopper respectivement d'un jeu de câbles avec un support (2) tourné vers l'extérieur, de telle manière qu'
- une lumière UV naturelle incidente ou la lumière du jour est absorbée à l'aide du support (2), parce que celui-ci est tourné respectivement vers l'extérieur tant à l'état de conservation qu'à l'état de traitement.

2. Utilisation selon la revendication 1, **caractérisée en ce que** la source lumineuse d'UV (6) irradie le revêtement adhésif (5) avec une dose d'UV d'un minimum de 15 mJ/cm², de préférence de 30 mJ/cm² et en particulier au minimum de 50 mJ/cm² et de préférence avec une dose d'UV allant de 150 mJ/cm² à 500 mJ/cm², en particulier de préférence entre 200 mJ/cm² et 400 mJ/cm².

3. Utilisation selon la revendication 1 ou 2, **caractérisée en ce que** la source lumineuse d'UV (6) est mise en œuvre comme telle sur une base à diodes électroluminescentes (DEL).

4. Utilisation selon la revendication 3, **caractérisée en ce que** la source lumineuse d'UV (6) est constituée à base de diodes électroluminescentes (DEL) en tant que source lumineuse UVA-DEL (6).

5. Utilisation selon l'une quelconque des revendications 1 à 4, **caractérisée en ce que** les photo-initiateurs sont incorporés dans le revêtement adhésif (5) dans un grammage d'au moins 0,05 %/poids, de préférence dans un grammage de 0,2 %/poids à 5 %/poids.

6. Utilisation selon l'une quelconque des revendications 1 à 5, **caractérisée en ce que** le revêtement adhésif (5) est appliqué au support (2) avec un poids d'application de plus de 15 g/cm².

7. Utilisation selon l'une quelconque des revendications 1 à 6, **caractérisée en ce qu'**un mélange à base de résine est prévu comme additif pour rehausser l'adhérence au support.

8. Utilisation selon l'une quelconque des revendications 1 à 7, **caractérisée en ce qu'**une structure de surface textile avec un grammage se situant entre 50 g/m² et 250 g/m², de préférence de 70 g/m² à 200 g/m², est utilisée comme support.
